# EUROPÄISCHE PATENTSCHRIFT

(11) **EP 3 921 132 B1**
(45) Veröffentlichungstag und Bekanntmachung des Hinweises auf die Patenterteilung: **01.02.2023**
(21) Anmeldenummer: 19809800.6
(22) Anmeldetag: 26.11.2019
(51) Int. Cl.: B29C 48/90, B22F 3/105, B22F 5/10, B29C 48/09, B29C 48/12, B29C 48/265, B33Y 10/00, B33Y 30/00, B33Y 50/00, B33Y 80/00

(54) **LAMELLENBLOCK FÜR EINE KALIBRIEREINRICHTUNG**
LAMELLA BLOCK FOR A CALIBRATION DEVICE
BLOC DE LAMELLES POUR UN DISPOSITIF D'ÉTALONNAGE

(30) Priorität: 21.03.2019 DE 102019002018
(43) Veröffentlichungstag der Anmeldung: 15.12.2021
(73) Patentinhaber: KraussMaffei Technologies GmbH, 80997 München (DE)
(72) Erfinder: ESSWEIN, Michael, 85777 Fahrenzhausen (DE); ALTMANN, Aron, 80805 München (DE)
(74) Vertreter: Krauss, Philipp
(86) Internationale Anmeldenummer: PCT/EP2019/082512
(87) Internationale Veröffentlichungsnummer: WO 2020/187435

(56) Entgegenhaltungen:
- EP-A2- 2 085 207
- DE-B3-102005 002 820
- US-A1- 2003 211 657
- US-A1- 2018 361 502
- US-B1- 6 200 119
- N. N.: "ADDITIVE FERTIGUNG - der Weg zur individuellen Produktion", Broschüre des Landes Hessen, 31. August 2018 (2018-08-31), XP055669214, Wiesbaden Gefunden im Internet: URL:https://www.technologieland-hessen.de/ mm/Additive_Fertigung_Aufl2_2018_web.pdf [gefunden am 2020-02-17]

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, die zusammen einen Kalibrierkorb mit kreisförmiger Kalibrieröffnung bilden, durch welche die zu kalibrierenden Rohre geführt werden (vgl. insbesondere die Figuren 1 und 2 der DE 198 43 340 C2). Ferner ist jeder Lamellenblock mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

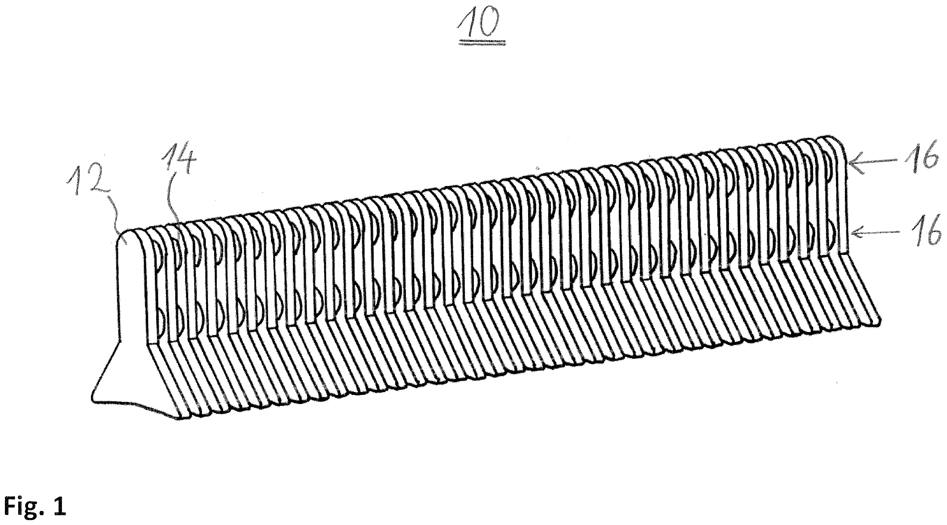

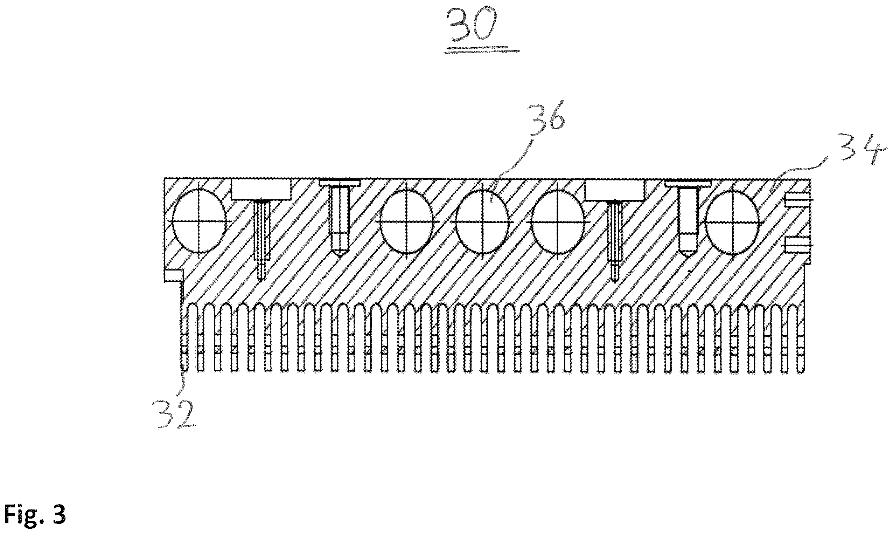

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2). Ein Beispiel eines gefädelten Lamellenblocks ist ferner in der Figur 1 gezeigt. Der in Figur 1 dargestellte Lamellenblock 10 umfasst eine Vielzahl von Lamellen 12 und Abstandshülsen 14, die abwechselnd entlang zweier Trägerstangen 16 aufgefädelt sind. Derartige gefädelte Lamellenblöcke sind aufwendig in der Fertigung und damit kostenintensiv.

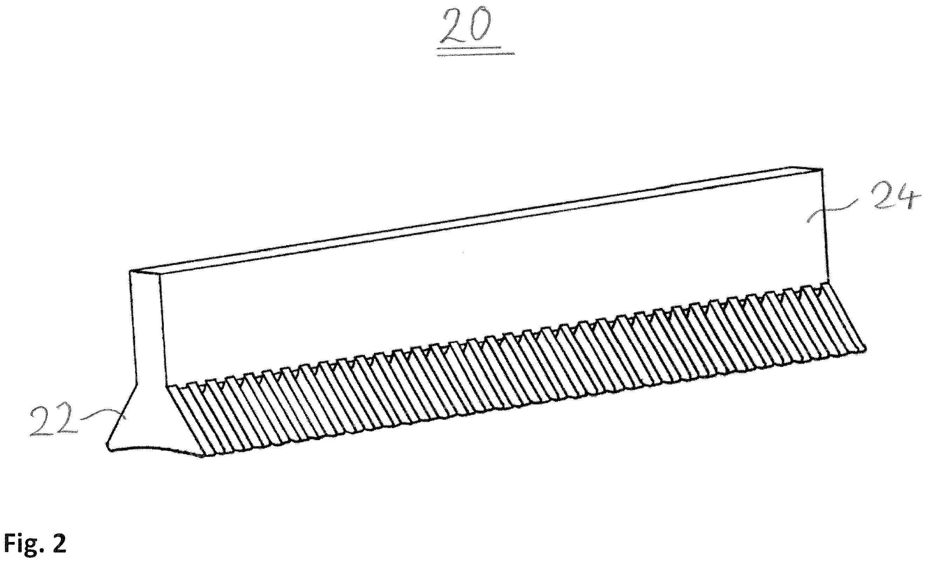

Abweichend von den oben beschriebenen gefädelten Lamellenblöcken sind ferner Lamellenblöcke mit geschlossenen Trägerstrukturen (bzw. Rückenstrukturen) bekannt. Fig. 2 zeigt ein Beispiel eines derartigen Lamellenblocks. Der Lamellenblock 20 umfasst eine Vielzahl von Lamellen 22, die von einer blockförmig ausgebildeten Rückenstruktur 24 getragen werden. Die blockförmige Rückenstruktur 24 ist hierbei in der Form eines massiven Körpers (z.B. stabförmiger Körper) realisiert. Weitere Beispiele von Lamellenblöcken mit geschlossener Rückenstruktur sind aus der WO 2004/103684 A1 bekannt.

Ein Vorteil von Lamellenblöcken mit geschlossener Rückenstruktur besteht darin, dass diese einfach und kostengünstig hergestellt werden können. Beispielsweise kann der in Fig. 2 dargestellte einstückig ausgebildete Lamellenblock 20 durch geeignete Bearbeitungsverfahren (wie beispielsweise Fräsen, Zuschneiden) aus einem Materialblock hergestellt werden. Denkbar ist aber auch der Einsatz eines Gussverfahrens, um den Lamellenblock 20 herzustellen. Ein weiterer Vorteil ist die hohe mechanische Belastbarkeit der massiven Rückenstruktur. Nachteilig ist jedoch, dass die Lamellenblöcke aufgrund ihrer massiven Rückenstruktur relativ schwer sind. Entsprechend ist auch das Gesamtgewicht einer Kalibriereinrichtung, die mit derartigen Lamellenblöcken bestückt ist, relativ hoch. Nachteilig ist ferner, dass die geschlossenen Rückenstrukturen undurchlässig für Wasser sind. Wenn sich im Betrieb der Kalibriereinrichtung der Kalibrierkopf mit den Lamellenblöcken dreht, kann sich ein ungünstiges Planschverhalten der Lamellenblöcke beim Eintauchen in einen Kühlwassersumpf des Kalibrierkorbs ergeben. Ferner ist der massiv ausgebildete Rückenstrukturkörper schwer zu kühlen.

Zur Verbesserung des Planschverhaltens und der Kühlung wurde ferner vorgeschlagen, die geschlossen ausgebildeten Rückenstrukturkörper mit Bohrungen zu versehen. Ein derartiges Lamellenblockdesign ist in der Figur 3 dargestellt. Figur 3 zeigt eine Schnittansicht eines Lamellenblocks 30, der eine Lamellenstruktur mit einer Vielzahl von Lamellen 32 sowie eine die Lamellen 32 tragende Rückenstruktur 34 aufweist. Die Rückenstruktur 34 ist mit kreisrunden Bohrungen 36 durchlöchert. Die Bohrungen 36 sind über der Rückenstruktur 34 gleichmäßig verteilt angeordnet und weisen denselben Durchmesser auf. Durch die Bohrungen 36 kann Wasser strömen, wodurch derartige Lamellenblöcke beim Eintauchen in den Kühlwassersumpf ein reduziertes Planschverhalten aufweisen. Zusätzlich kann das durch die Bohrungen 36 strömende Wasser die Rückenstruktur 34 von Innen kühlen. Um die mechanischen Eigenschaften (insbesondere die Steifigkeit) der Rückenstruktur 34 nicht allzu sehr zu schwächen, ist jedoch die Anzahl der Bohrungen 36 in der Rückenstruktur 34 begrenzt. Ferner sind die Bohrquerschnitte im Vergleich zum Querschnitt der Rückenstruktur 34 klein ausgebildet. Dadurch können die in Zusammenhang mit einer geschlossenen Rückenstruktur diskutierten Probleme des Planschens und der Kühlung auch mit diesem Design nur zum Teil oder zumindest nicht optimal gelöst werden.

DE 10 2005 002 820 B3 betrifft eine stufenlos einstellbare Kalibrierhülse für extrudierte Kunststoffrohre mit einem Einlaufkopf und zwei Bänderlagen, die sich nach Art eines Scherengitters kreuzen und an den Kreuzungspunkten gelenkig miteinander verbunden sind. Dabei sind der Einlaufkopf und die Bänderlagen auf den Rohrdurchmesser einstellbar und der Einlaufkopf weist in einer Radialebene angeordnete, auf den Umfang des zu kalibrierenden Kunststoffrohres verteilte, radial verstellbare und sich überlappende Segmente auf, die in ihren Überlappungsbereichen Schlitze aufweisen und verzahnend ineinandergreifen. Die Stirnseiten der Segmente sind zur Anlage an das zu kalibrierende Kunststoffrohr ausgebildet und die Bänderlagen sind bündig mit den Stirnseiten gelenkig an den Segmenten befestigt. Mit einer derartigen Kalibrierhülse soll eine effektive Abdichtung des Vakuumtanks gegenüber der Umgebung erreicht sowie Stauchungen des einlaufenden, extrudierten Kunststoffrohres vermieden werden.

EP2085207A2 betrifft eine Vorrichtung zur Herstellung von Blasfolie mit einem einen extrudierten Kunststoffschlauch (2) umhüllenden Kühlring zur Aufbringung eines Flüssigkeitsfilms auf die Außenseite des Kunststoffschlauches, wobei der Kühlring eine optimale Kühlwirkung bei unterschiedlichen Folienbreiten gewährleistet.

US6200119B1 offenbart einen Extrusionskalibrator zum Kalibrieren des Außenprofils eines thermoplastischen extrudierten Produkts, das aus einer Extrusionsdüse austritt. Dieser weist eine modulare Kalibrierkassette von Kalibrierplatten in einer umgebenden Hülle auf. Eine Kalibrierkassette ist innerhalb der Hülle leicht gegen eine andere Kalibrierkassette mit einem anderen extrudierten Produktquerschnittsprofil austauschbar. Die Kassettenplatten haben ebene Oberflächen, die frei von Fluidleitwegen sind. Fluidleitwege zum Leiten von Vakuum und Kühlmittel durch den Kalibrator werden durch Vakuum- und Kühlmittel führende Verteiler und Kanäle im Gehäuseinneren und durch Zwischenplattenabstände hergestellt, die mit diesen Kanälen zusammenpassen.

US 2003 / 211 657 A1 beschreibt einen stereolithographisch gefertigten Kühlkörper. Der Kühlkörper weist ein Wärmeübertragungselement auf, das so konfiguriert ist, dass es in der Nähe einer Halbleitervorrichtung angeordnet ist, um während seiner Verwendung Wärme von der Halbleitervorrichtung zu absorbieren. Der Kühlkörper hat auch ein Wärmeableitungselement, das konfiguriert ist, um Wärme abzugeben, wenn Luft an einer Oberfläche davon vorbeiströmt. Wenn stereolithographische Verfahren verwendet werden, um das Wärmeableitungselement des Kühlkörpers herzustellen, kann das Wärmeableitungselement nichtlineare oder gewundene Durchgänge aufweisen, durch die Luft strömen kann. Da mindestens ein Teil des Kühlkörpers stereolithographisch hergestellt ist, kann dieser Teil eine Reihe übereinanderliegender, zusammenhängender, aneinander haftender Schichten aus wärmeleitendem Material aufweisen. Die Schichten können durch konsolidierte ausgewählte Bereiche einer Schicht aus nicht konsolidiertem teilchenförmigem oder pulverförmigem Material oder durch Definieren einer Objektschicht aus einer Materialschicht hergestellt werden. Das stereolithographische Verfahren kann die Verwendung eines Bildverarbeitungssystems umfassen, das mindestens eine Kamera umfasst, die betriebsbereit mit einem Computer verbunden ist, der eine stereolithographische Materialanwendung steuert, so dass das System die Position und Ausrichtung einer Halbleitervorrichtung oder eines anderen Substrats erkennen kann, auf dem sich der Kühlkörper befindet hergestellt werden.

US2018361502A1 ·offenbart eine Komponente mit einem Körper und einer Grenzfläche in dem Körper, die einen ersten und einen zweiten Abschnitt des Körpers definiert, die durch verschiedene Schmelzstrahlquellen eines additiven Fertigungssystems mit mehreren Schmelzstrahlquellen während eines einzigen Baus hergestellt werden. Die Komponente umfasst auch einen Kanal, der sich durch den Körper erstreckt. Der Kanal enthält einen grenzflächenfernen Bereich auf gegenüberliegenden Seiten der Schnittstelle, wobei jeder grenzflächenferne Bereich eine erste Breite hat. Der Kanal umfasst auch einen Bereich mit vergrößerter Breite, der mit den grenzflächenfernen Bereichen in Fluidverbindung steht und die Schnittstelle überspannt, wobei der Bereich mit vergrößerter Breite eine zweite Breite aufweist, die größer als die erste Breite ist. Jegliche Fehlausrichtung der Schmelzstrahlen an der Grenzfläche wird durch den vergrößerten Breitenbereich behoben, wodurch das Problem eines verringerten Kühlfluidflusses im Kanal beseitigt wird.

Es ist daher Aufgabe der vorliegenden Erfindung, Lamellenblöcke für eine Kalibriereinrichtung bereitzustellen, welche die im Zusammenhang mit dem Stand der Technik aufgezeigten Probleme weiter reduzieren bzw. beseitigen. Ferner ist es Aufgabe der vorliegenden Erfindung, Lamellenblöcke bereitzustellen, welche kostengünstig in der Herstellung sind und bei geringem Eigengewicht eine möglichst große mechanische Stabilität aufweisen. Aufgabe der vorliegenden Erfindung ist es auch, ein Herstellungsverfahren anzugeben, das eine schnelle und kostengünstige Herstellung der erfindungsgemäßen Lamellenblöcke ermöglicht.

Zur Lösung der oben genannten Aufgabe wird ein Lamellenblock für eine Kalibriereinrichtung zur Kalibrierung eines extrudierten Kunststoffprofils bereitgestellt, wobei der Lamellenblock eine Rückenstruktur und eine eine Vielzahl von Lamellen aufweisende Lamellenstruktur umfasst, wobei die Lamellen zueinander beabstandet und in Längsrichtung der Rückenstruktur an der Rückenstruktur angeordnet sind. Die Rückenstruktur weist mehrere Durchbrüche auf, deren Form und/oder Anordnung innerhalb der Rückenstruktur von einer für die Rückenstruktur vorgegebenen mechanischen Belastbarkeit abhängt.

Die Rückenstruktur kann ein im Querschnitt zur Längsrichtung vorgegebenes Profil aufweisen. Das Querschnittsprofil der Rückenstruktur kann entsprechend der für die Rückenstruktur vorgegebenen mechanischen Belastbarkeit gewählt sein. Gemäß einer Variante kann das Querschnittsprofil der Rückenstruktur T-förmig ausgebildet sein. Gemäß einer alternativen Variante kann das Querschnittsprofil der Trägerstruktur auch I-förmig ausgebildet sein.

Mit mechanischer Belastbarkeit kann die mechanische Steifigkeit (Biegesteifigkeit, Schubsteifigkeit und/oder Torsionssteifigkeit) der Rückenstruktur gemeint sein. Mit anderen Worten kann die mechanische Belastbarkeit über den Parameter Steifigkeit beschrieben werden. Der Lamellenblock kann je nach Einsatz und Konstruktion der Kalibriereinrichtung unterschiedlichen mechanischen Belastungen ausgesetzt sein. Entsprechend kann die Rückenstruktur des Lammellenblocks durch Wahl eines geeigneten Querschnittsprofils und/oder von Durchbrüchen derart ausgebildet sein, dass die Rückenstruktur eine Steifigkeit aufweist, welche den auftretenden mechanischen Belastungen standhält.

Die Durchbrüche können im Wesentlichen quer zur Längsrichtung verlaufend in der Rückenstruktur ausgebildet sein. Ferner kann die Form und/oder die Anordnung der Durchbrüche entlang der Rückenstruktur (also entlang der Längsrichtung der Rückenstruktur) variieren. Mit anderen Worten können die entlang der Rückenstruktur ausgebildeten Durchbrüche Öffnungsquerschnitte aufweisen, deren Form und/oder Größe zueinander variieren. Beispielsweise können entlang der Rückenstruktur Abschnitte mit zu erwartender geringer mechanischer Belastung auftreten, die dann mit einem oder mehreren Durchbrüchen mit großer Querschnittsöffnung versehen sind. Ferner können Bereiche mit zu erwartender hoher mechanischer Belastung auftreten, die dann mit einem oder mehreren Durchbrüchen mit kleinerer Querschnittsöffnung versehen sind. Genauso kann die Anzahl der Durchbrüche und deren Anordnung zueinander abhängig von den zu erwartenden mechanischen Belastungen entlang der Rückenstruktur variieren. Die Form und/oder Anordnung der Durchbrüche entlang der Rückenstruktur ist somit nicht homogen, sondern entsprechend der zu erwartenden (errechneten) mechanischen Belastungen angepasst.

Die Durchbrüche sind in ihrer Querschnittsform derart ausgebildet und entlang der Rückenstruktur derart angeordnet, dass die Rückenstruktur unter Erfüllung einer vorgegebenen mechanischen Belastbarkeit ein optimiertes Eigengewicht aufweist. Mit anderen Worten können die Durchbrüche derart ausgestaltet sein, dass die Trägerstruktur (und somit der Lamellenblock) für das Erreichen einer vorgegebenen mechanischen Belastbarkeit ein minimales Gewicht aufweist.

Die Rückenstruktur kann mit den Lamellen bzw. der Lamellenstruktur einstückig ausgebildet sein. Zur Erreichung einer einstückigen Ausbildung kann der Lamellenblock mittels 3D-Druck hergestellt werden. Denkbar ist jedoch auch, dass der Lamellenblock beispielsweise durch Fräsen, Bohren und/oder Schneiden aus einem einzigen Werkstück gefertigt wird. Alternativ kann die Lamellenstruktur bzw. die Lamellen sowie die Rückenstruktur jeweils separat gefertigt sein. Die Lamellenstruktur bzw. Lamellen kann (können) dann mit der Rückenstruktur entsprechend verbunden sein.

Die Rückenstruktur und die Lamellen können aus demselben Material oder aus verschiedenen Materialien gefertigt sein. Gemäß einer Variante kann das Material, aus dem die Rückenstruktur und/oder die Lamellen gefertigt sind, aus einem metallischen Werkstoff gefertigt sein. Denkbar ist jedoch auch die Verwendung eines polymeren Werkstoffs (mit Additiven).

Gemäß einem weiteren Aspekt der Erfindung wird eine Kalibriereinrichtung zur Kalibrierung von extrudierten Kunststoffprofilen bereitgestellt, wobei die Kalibriereinrichtung eine Vielzahl der erfindungsgemäßen Lamellenblöcke aufweist, die zur Bildung einer Kalibrieröffnung zueinander angeordnet sind. Die Anordnung der Lamellenblöcke kann dabei derart sein, dass diese eine kreisrunde Kalibrieröffnung bilden.

Die Kalibriereinrichtung kann ferner eine Vielzahl von Betätigungseinrichtungen umfassen, wobei jede der Vielzahl von Betätigungseinrichtungen mit einem Lamellenblock der Vielzahl von Lamellenblöcken gekoppelt ist. Durch die Betätigungseinrichtung kann jeder Lamellenblock radial zur Kalibrieröffnung individuell betätigt werden. Dadurch kann der Wirkquerschnitt der Kalibrieröffnung nach Bedarf an den Querschnitt (Durchmesser) des zu kalibrierenden Profils angepasst werden.

Ferner kann die Kalibriereinrichtung ein Gehäuse aufweisen, das zur Aufnahme und Lagerung der Betätigungseinrichtung und der mit der Betätigungseinrichtung gekoppelten Lamellenblöcke vorgesehen ist.

Gemäß einem weiteren Aspekt der vorliegenden Erfindung wird ein Verfahren zum Herstellen eines Lamellenblocks wie oben beschrieben bereitgestellt. Das Verfahren zum Herstellen des Lamellenblocks umfasst wenigstens den Schritt des Herstellens des Lamellenblocks mittels 3D-Druck oder mittels additiver Fertigung. Die Herstellung des Lamellenblocks mittels 3D-Druckverfahren oder additiver Fertigung kann hierbei ein schichtweises Lasersintern/Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer Lamellenblockgeometrie (CAD-Daten) umfassen und, optional, das Umwandeln der 3D-Geometriedaten in entsprechende Steuerbefehle für den 3D-Druck oder das additive Fertigungsverfahren.

Insbesondere kann der Schritt des Berechnens einer 3D-Geometrie den Schritt des Berechnens einer optimierten Trägerstruktur umfassen, welche die Form und Anordnung der Aussparungen an die zu erwartenden lokalen mechanischen Belastungen der Trägerstruktur (bzw. des Lamellenblocks) anpasst. Auf diese Weise kann eine im Gewicht reduzierte Rückenstruktur erzeugt werden, ohne die mechanische Belastung des Lamellenblocks zu schwächen.

Gemäß einem weiteren Aspekt wird ein Verfahren zum Herstellen eines Lamellenblocks bereitgestellt, das die Schritte umfasst: Erstellen eines Datensatzes, welcher den wie oben beschrieben Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschrieben Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschrieben Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Gemäß einem weiteren Aspekt wird ein Datensatz bereitgestellt, welcher den wie oben beschrieben Lamellenblock abbildet. Der Datensatz kann auf einem computerlesebaren Datenträger gespeichert sein.

Weitere Vorteile, Einzelheiten und Aspekte der vorliegenden Erfindung werden anhand der nachfolgenden Zeichnungen weiter diskutiert. Es zeigen:
- **Fig. 1**: einen Lamellenblock für eine Kalibriereinrichtung gemäß dem Stand der Technik;
- **Fig. 2**: einen weiteren Lamellenblock für eine Kalibriereinrichtung gemäß dem Stand der Technik;
- **Fig. 3**: eine Schnittansicht eines weiteren Lamellenblocks gemäß dem Stand der Technik;
- **Fig. 4**: ein Beispiel eines erfindungsgemäßen Lamellenblocks; und
- **Fig. 5**: ein Blockdiagramm eines Verfahrens zur Herstellung des erfindungsgemäßen Lamellenblocks.

Die Figuren 1 bis 3 wurden bereits im Zusammenhang mit dem Stand der Technik eingangs diskutiert. Es sei auf die dortige Beschreibung verwiesen.

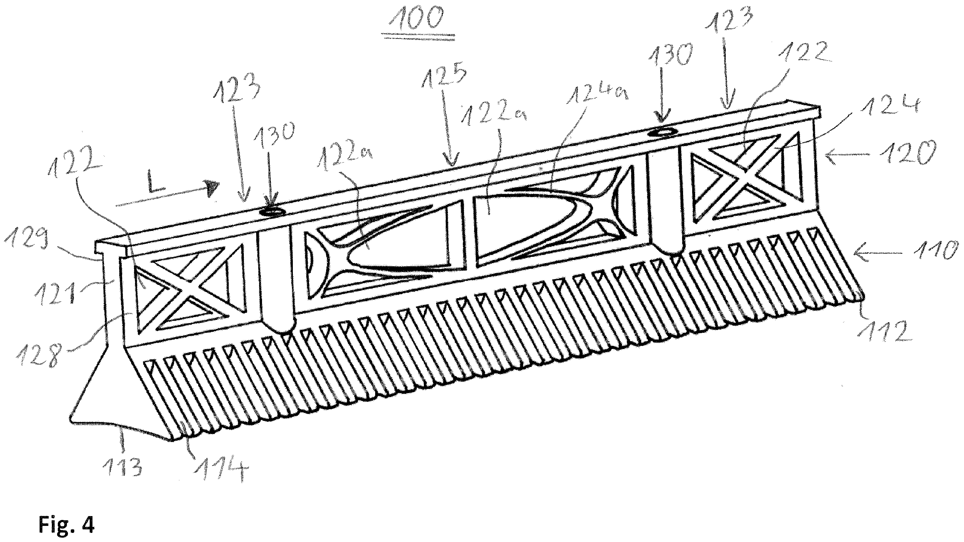

Im Zusammenhang mit der Figur 4 wird nun ein Beispiel eines erfindungsgemäßen Lamellenblocks 100 für eine Kalibriereinrichtung weiter beschrieben.

Der Lamellenblock 100 umfasst eine Rückenstruktur 120 sowie eine Lamellenstruktur 110, die eine Vielzahl von Lamellen 112 aufweist. Die Rückenstruktur 120 fungiert als Träger für die Lamellenstruktur 110.

Der Lamellenblock 100 kann ferner eine Kopplungseinrichtung 130 aufweisen, welche zur Kopplung mit einer Betätigungseinrichtung einer Kalibriereinrichtung vorgesehen ist. Die Betätigungseinrichtung ist in der Figur 4 nicht zu sehen. Gemäß der in Figur 4 gezeigten Implementierung umfasst die Kopplungseinrichtung zwei voneinander beabstandet angeordnete Gewindebohrungen 130. Die Gewindebohrungen 130 können in der Rückenstruktur 120 integriert ausgebildet sein.

Die Lamellenstruktur 110 umfasst eine Vielzahl von Lamellen 112, die in Längsrichtung L des Lamellenblocks 100 voneinander beabstandet angeordnet sind. Benachbarte Lamellen 112 sind durch entsprechende Nuten 114 voneinander getrennt. In der in Figur 4 dargestellten Ausführungsform weist jede Lamelle 112 ein im Querschnitt zur Längsrichtung L dreiecksförmiges Profil auf. Die der Rückenstruktur 120 abgewandte Lamellenseite 113 ist leicht gekrümmt ausgebildet. Die Lamellenseite 113 ist dem zu kalibrierenden Profil zugewandt. Sie bildet die Kontaktseite mit dem zu kalibrierenden Profil. Je nach Anwendung kann der Lamellenblock 100 auch eine andere Lamellenform aufweisen, die von dem hier beschriebenen dreieckförmigen Querschnittsprofil abweichen kann. Ebenso kann die dem zu kalibrierenden Profil zugewandte Lamellenseite 113 flach sein oder eine anderweitige Krümmung aufweisen.

Die Rückenstruktur 120 ist als länglicher Körper ausgebildet mit einem senkrecht zur Längsrichtung L vorgegebenen Querschnittsprofil 121. In der in Figur 4 gezeigten Ausführungsform weist die Rückenstruktur 120 ein T-Profil auf. Andere Profile, wie beispielsweise ein I-Profil sind ebenso denkbar. Das Querschnittsprofil 121 der Rückenstruktur 120 kann abhängig von den zu erwartenden, auf die Rückenstruktur 120 einwirkenden Belastungskräften entsprechend gewählt werden.

Unabhängig vom konkreten Querschnittsprofil (T-Profil oder I-Profil) sind in der Rückenstruktur 120 in Längsrichtung L eine Vielzahl von Durchbrüchen 122, 122a (Durchlöcherungen) ausgebildet. Diese Durchbrüche 122, 122a verlaufen im Wesentlichen senkrecht zur Längsrichtung L. Sie verbinden die beiden lateralen Flanken 128, 129 der Rückenstruktur 120. Es entsteht so eine Rückenstruktur 120 mit einem vorgegebenen Querschnittsprofil 121, welche an ihren lateralen Flanken 128, 129 durchbrochen ist.

Wie ferner aus der Figur 4 hervorgeht, variiert das Design (genauer gesagt die Form und/oder die Größe) der einzelnen Durchbrüche 122, 122a in Längsrichtung L der Rückenstruktur 120. Die beiden Endabschnitte 123 der Rückenstruktur 120 weisen zum Teil Durchbrüche 122 mit kleineren Querschnittsöffnungen auf als der Mittelabschnitt 125 (vgl. insbesondere die beiden zentral angeordneten Durchbrüche 122a), da dieser Abschnitt im Betrieb der Kalibriermaschine geringeren mechanischen Belastungen ausgesetzt ist als die beiden in Längsrichtung L gegenüberliegenden Endabschnitte 123. Neben der Größe kann auch die Form der Durchbrüche 122, 122a (die Form der Querschnittsöffnungen der Durchbrüche 122, 122a) in Abhängigkeit der auf einen Abschnitt der Rückenstruktur 120 einwirkenden mechanischen Belastungen entsprechend variiert werden. Beispielsweise sind die Endabschnitte 123 der Rückenstruktur 120 mit dreieckförmigen Durchbrüchen 122 versehen, während der Mittelabschnitt 125 Durchbrüche 122a aufweist, die von der Dreiecksform abweichen. Allgemein kann gesagt werden, dass gemäß der vorliegenden Erfindung die Größe und/oder Form der Durchbrüche 122, 122a in Abhängigkeit der auf die Rückenstruktur 120 einwirkenden mechanischen Belastungskräfte ausgebildet sind. Insbesondere kann die Größe und/oder Form der in der Rückenstruktur 120 ausgebildeten Durchbrüche 122a entlang seiner Längsrichtung L variieren, da im Betrieb der Lamellenblock 100 in Längsrichtung L unterschiedlichen Kräften ausgesetzt sein kann.

In der in Figur 4 dargestellten Ausführungsform sind die Durchbrüche 122, 122a ferner derart dimensioniert und angeordnet, dass die Rückenstruktur 120 neben einer vorgegebenen mechanischen Belastbarkeit auch noch ein reduziertes (minimiertes) Eigengewicht aufweist. Das Resultat einer derartigen Gewichtsoptimierung unter Beibehaltung der vorgegebenen mechanischen Belastbarkeit ist eine Rückenstruktur 120, die aufgrund der Durchbrüche 122, 122a im Wesentlichen rahmenförmig ausgebildet ist und im Inneren des Rahmens Verstrebungen 124, 124a aufweist. Die Form der Verstrebungen 124, 124a hängt von den lokalen Belastbarkeitsanforderungen an die Rückenstruktur 120 ab und kann in Längsrichtung L der Rückenstruktur 120 variieren.

Die hier beschriebene (maximale) Reduzierung des Eigengewichts der Rückenstruktur 120 unter Einhaltung vorgegebener mechanischer Belastbarkeitsanforderungen kann mit Hilfe eines mathematischen Modells für jeden Lamellenblock 100 simuliert werden (z.B. mittels Finite Elemente-Simulation). Entsprechend den Simulationsergebnissen und der daraus resultierenden Topologie der Durchbrüche 122, 122a kann die Rückenstruktur 120 entsprechend hergestellt werden.

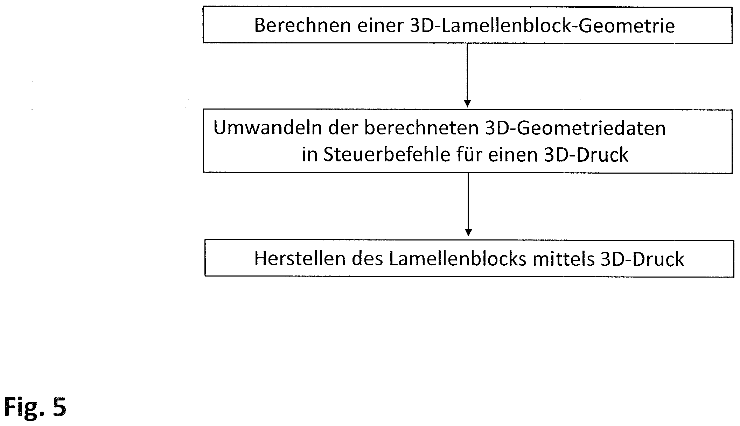

Zur Herstellung der Rückenstruktur 120 (bzw. des gesamten Lamellenblocks 120) kann ein generatives bzw. additives Fertigungsverfahren zum Einsatz kommen. Ein derartiges Herstellungsverfahren ist in Figur 5 gezeigt. Demnach kommt ein 3D-Druckverfahren zum Einsatz. Hierbei werden in einem ersten Schritt auf der Grundlage der oben beschriebenen Simulation, welche eine geeignete Topologie der Rückenstruktur 120 simuliert, 3D-Geometriedaten (CAD-Daten) berechnet. Die 3D-Geometriedaten beschreiben die Geometrie der Rückenstruktur (bzw. des gesamten Lamellenblocks 100). In einem zweiten Schritt werden die berechneten 3D-Geometriedaten in Steuerbefehle für einen 3D-Druck umgewandelt. Basierend auf den erzeugten Steuerbefehlen wird dann die Rückenstruktur (oder der gesamte Lamellenblock 100) mittels eines 3D-Druckverfahrens (z.B. Lasersintern, Laserschmelzen) schichtweise aufgebaut. Als Werkstoff für den 3D-Druck kann ein metallischer Werkstoff oder ein Polymerwerkstoff zum Einsatz kommen.

Alternativ zur Herstellung mittels 3D-Druck ist auch denkbar, die Rückenstruktur 120 (bzw. den gesamten Lamellenblock 100) aus einem Werkstück (beispielsweise durch Fräsen, Bohren, Schneiden) oder mittels eines Gussverfahrens herzustellen.

Der in Figur 4 gezeigte Lamellenblock 100 kann zusammen mit einer Vielzahl weiterer gleichartiger Lamellenblöcke 100 einen Kalibrierkorb für eine Kalibriereinrichtung bilden. Die Anordnung der Vielzahl von Lamellenblöcke 100 zur Bildung eines Kalibrierkorbs mit vorgegebenem Kalibrierquerschnitt kann in einer analogen Weise erfolgen wie in der DE 198 43 340 A1 beschrieben.

Es versteht sich, dass der in Fig. 4 gezeigte Lamellenblock 100 exemplarisch ist und andere Geometrien in der Ausgestaltung der Lamellen 122 als auch in der Ausgestaltung der Rückenstruktur 110 denkbar sind. Wesentlich für die vorliegende Erfindung ist, dass die Rückenstruktur 120 Durchbrüche 122, 122a aufweist, deren Form und/oder Anordnung an die zu erwartenden, auftretenden mechanischen Belastungen angepasst ist und innerhalb der Rückenstruktur variieren kann/können. Die Durchbrüche 122, 122a beschränken sich somit nicht nur auf uniforme kreisrunde Bohrungen, um ein Durchdringen von Wasser zu ermöglichen. Vielmehr sind die einzelnen Durchbrüche 122, 122a in ihrer Form und Struktur dahingehend optimiert, dass die Rückenstruktur 120 wesentlich weniger Material aufweist und gleichzeitig eine möglichst hohe mechanische Belastbarkeit aufweist. Somit kann nicht nur der Materialeinsatz weiter reduziert werden, sondern auch das Gesamtgewicht von Kalibriereinrichtungen, in die der oben beschriebene Lamellenblock eingebaut werden kann. Ferner werden das Planschverhalten und die Kühlung durch das hier beschriebene Design der Rückenstruktur weiter verbessert. Ferner sinken durch den reduzierten Materialeinsatz die Herstellungskosten des Lamellenblocks.

## Patentansprüche

1. Lamellenblock (100) zur Kalibrierung eines extrudierten Profils innerhalb einer Kalibriereinrichtung, wobei der Lamellenblock (100) eine Rückenstruktur (120) und eine eine Vielzahl von Lamellen (112) aufweisende Lamellenstruktur (110) umfasst, wobei die Lamellen (112) zueinander beabstandet und in Längsrichtung (L) der Rückenstruktur (120) an der Rückenstruktur (120) angeordnet sind, wobei die Rückenstruktur (120) mehrere Durchbrüche (122, 122a) aufweist, deren Form und/oder Anordnung innerhalb der Rückenstruktur (120) von einer für die Rückenstruktur (120) vorgegebenen mechanischen Belastbarkeit abhängt, **dadurch gekennzeichnet, dass** die Durchbrüche (122, 122a) in ihrer Querschnittsform derart ausgebildet sind und entlang der Rückenstruktur (120) derart angeordnet sind, dass die Rückenstruktur (120) unter Einhaltung der vorgegebenen mechanischen Belastbarkeit ein optimiertes Eigengewicht aufweist.

2. Lamellenblock (100) nach Anspruch 1, **dadurch gekennzeichnet, dass** die Rückenstruktur (120) ein im Querschnitt zur Längsrichtung (L) vorgegebenes und an die mechanische Belastbarkeit angepasstes Profil (121) aufweist.

3. Lamellenblock (100) nach einem der vorhergehenden Ansprüche, **dadurch gekennzeichnet, dass** die Durchbrüche (122, 122a) entlang der Rückenstruktur (120) und im Wesentlichen quer zur Längsrichtung (L) der Rückenstruktur (120) verlaufend ausgebildet sind.

4. Lamellenblock (100) nach einem der vorhergehenden Ansprüche, **dadurch gekennzeichnet, dass** die Durchbrüche (122, 122a) in ihrer Form und/oder Anordnung entlang der Rückenstruktur (120) variieren.

5. Lamellenblock (100) nach Anspruch 4, **dadurch gekennzeichnet, dass** die Form und/oder Anordnung der Durchbrüche (122, 122a) entsprechend der entlang des Lamellenblocks (100) zu erwartenden auftretenden mechanischen Belastung variiert/en.

6. Lamellenblock (100) nach einem der vorhergehenden Ansprüche, **dadurch gekennzeichnet, dass** der Lamellenblock (100) einstückig ausgebildet ist.

7. Lamellenblock (100) nach einem der vorhergehenden Ansprüche, **dadurch gekennzeichnet, dass** die Rückenstruktur (120) und die Lamellen (112) der Lamellenstruktur (110) aus demselben Material oder aus verschiedenen Materialien gefertigt sind.

8. Lamellenblock (100) nach einem der vorhergehenden Ansprüche, **dadurch gekennzeichnet, dass** die Rückenstruktur (120) und/oder die Lamellen (112) aus einem metallischen Werkstoff oder einem Polymerwerkstoff gebildet sind.

9. Lamellenblock nach einem der vorhergehenden Ansprüche, **dadurch gekennzeichnet, dass** der Lamellenblock (100) mittels 3D-Druck bzw. mittels eines additiven Fertigungsverfahrens hergestellt ist.

10. Kalibriereinrichtung zur Kalibrierung von extrudierten Profilen, umfassend eine Vielzahl von Lamellenblöcken (100) gemäß einem der Ansprüche 1 bis 9, wobei die Lamellenblöcke (100) zur Bildung einer Kalibrieröffnung zueinander angeordnet sind.

11. Kalibriereinrichtung nach Anspruch 10, wobei die Kalibriereinrichtung eine Vielzahl von Betätigungseinrichtungen umfasst, wobei jede der Vielzahl von Betätigungseinrichtungen mit einem der Vielzahl von Lamellenblöcken (100) gekoppelt ist, um einen jeden Lamellenblock (100) individuell zu betätigen.

12. Verfahren zum Herstellen eines Lamellenblocks (100) gemäß einem der Ansprüche 1 bis 9, umfassend den Schritt des Herstellens des Lamellenblocks (100) mittels 3D-Druck bzw. mittels additiver Fertigung, wobei der Lamellenblock (100) eine Rückenstruktur (120) und eine eine Vielzahl von Lamellen (112) aufweisende Lamellenstruktur (110) umfasst, wobei die Lamellen (112) zueinander beabstandet und in Längsrichtung (L) der Rückenstruktur (120) an der Rückenstruktur (120) angeordnet sind, und die Rückenstruktur (120) mehrere Durchbrüche (122, 122a) aufweist, deren Form und/oder Anordnung innerhalb der Rückenstruktur (120) von einer für die Rückenstruktur (120) vorgegebenen mechanischen Belastbarkeit abhängt, wobei die Durchbrüche (122, 122a) in ihrer Querschnittsform derart ausgebildet sind und entlang der Rückenstruktur (120) derart angeordnet sind, dass die Rückenstruktur (120) unter Einhaltung der vorgegebenen mechanischen Belastbarkeit ein optimiertes Eigengewicht aufweist.

13. Verfahren nach Anspruch 12, ferner umfassend Berechnen einer optimierten Trägerstruktur einer 3D-Lamellenblock-Geometrie, und Umwandeln der berechneten 3D-Geometriedaten in entsprechende Steuerbefehle für den 3D-Druck bzw. die additive Fertigung, wobei Form und Anordnung der Durchbrüche (122, 122a) an die zu erwartenden lokalen mechanischen Belastungen der Trägerstruktur angepasst werden, um eine im Gewicht reduzierte Rückenstruktur zu erzeugen, ohne die mechanische Belastung des Lamellenblocks (100) zu schwächen.

14. Verfahren zum Herstellen eines Lamellenblocks (100), die Schritte umfassend:
- Erstellen eines Datensatzes, welcher den Lamellenblock (100) nach einem der Ansprüche 1 bis 9 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100) fertigt.

15. System zur additiven Fertigung eines Lamellenblocks (100), umfassend:
- Datensatzerzeugungsvorrichtung zum Erzeugen eines Datensatzes, welcher den Lamellenblock (100) nach einem der Ansprüche 1 bis 9 abbildet;
- Speichervorrichtung zum Speichern des Datensatzes;
- Verarbeitungsvorrichtung zum Empfangen des Datensatzes und zum derartigen Ansteuern einer Vorrichtung zur additiven Fertigung, dass diese den im Datensatz abgebildeten Lamellenblock (100) fertigt.

16. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100) mit den Merkmalen nach einem der Ansprüche 1 bis 9 fertigt.

17. Computerlesbarer Datenträger, auf dem das Computerprogramm nach Anspruch 16 gespeichert ist.

## Claims

1. A lamella block (100) for the calibration of an extruded profile within a calibration device, wherein the lamella block (100) comprises a spine structure (120) and a lamella structure (110) having a plurality of lamellae (112), wherein the lamellae (112) are arranged on the spine structure (120) spaced apart from one another and in longitudinal direction (L) of the spine structure (120), wherein the spine structure (120) has a plurality of apertures (122, 122a), the shape and/or arrangement of which within the spine structure (120) depends on a predetermined mechanical load capacity for the spine structure (120), **characterized in that**
the apertures (122, 122a) are configured in their cross-sectional shape and arranged along the spine structure (120) such that the spine structure (120) has an optimized net weight whilst maintaining the predetermined mechanical load capacity.

2. The lamella block (100) according to Claim 1, **characterized in that** the spine structure (120) has a profile (121) which is predetermined in cross-section to the longitudinal direction (L) and is adapted to the mechanical load capacity.

3. The lamella block (100) according to one of the preceding claims, **characterized in that** the apertures (122, 122a) are formed running along the spine structure (120) and substantially transversely to the longitudinal direction (L) of the spine structure (120).

4. The lamella block (100) according to one of the preceding claims, **characterized in that** the apertures (122, 122a) vary in their shape and/or arrangement along the spine structure (120).

5. The lamella block (100) according to Claim 4, **characterized in that** the shape and/or arrangement of the apertures (122, 122a) varies/vary according to the anticipated occurring mechanical load along the lamella block (100).

6. The lamella block (100) according to one of the preceding claims, **characterized in that** the lamella block (100) is formed in one piece.

7. The lamella block (100) according to one of the preceding claims, **characterized in that** the spine structure (120) and the lamellae (112) of the lamella structure (110) are made from the same material or from different materials.

8. The lamella block (100) according to one of the preceding claims, **characterized in that** the spine structure (120) and/or the lamellae (112) are formed from a metallic material or from a polymer material.

9. The lamella block according to one of the preceding claims, **characterized in that** the lamella block (100) is produced by means of 3D printing or respectively by means of an additive manufacturing method.

10. A calibration device for the calibration of extruded profiles, comprising a plurality of lamella blocks (100) according to one of Claims 1 to 9, wherein the lamella blocks (100) are arranged with respect to one another for the formation of a calibration opening.

11. The calibration device according to Claim 10, wherein the calibration device comprises a plurality of actuating devices, wherein each of the plurality of actuating devices is coupled with one of the plurality of lamella blocks (100), in order to actuate each lamella block (100) individually.

12. A method for producing a lamella block (100) according to one of Claims 1 to 9, comprising the step of producing the lamella block (100) by means of 3D printing or respectively by means of additive manufacture, wherein the lamella block (100) comprises a spine structure (120) and a lamella structure (110) having a plurality of lamellae (112), wherein the lamellae (112) are arranged on the spine structure (120) spaced apart from one another and in longitudinal direction (L) of the spine structure (120), and the spine structure (120) has a plurality of apertures (122, 122a), the shape and/or arrangement of which within the spine structure (120) depends on a predetermined mechanical load capacity for the spine structure (120), wherein the apertures (122, 122a) are configured in their cross-sectional shape and arranged along the spine structure (120) such that the spine structure (120) has an optimized net weight whilst maintaining the predetermined mechanical load capacity.

13. The method according to Claim 12, further comprising calculating an optimized support structure of a 3D lamella block geometry, and converting the calculated 3D geometry data into corresponding control commands for the 3D printing or respectively the additive manufacture, wherein the shape and arrangement of the apertures (122, 122a) are adapted to the anticipated local mechanical loads of the support structure, in order to produce a spine structure which is reduced in weight without weakening the mechanical load of the lamella block (100).

14. A method for producing a lamella block (100), comprising the steps:
- establishing a data set which represents the lamella block (100) according to one of Claims 1 to 9;
- storing the data set on a storage device or a server; and
- inputting the data set into a processing device or a computer, which actuates a device for additive manufacture such that it manufactures the lamella block (100) which is represented in the data set.

15. A system for the additive manufacture of a lamella block (100), comprising:
- data set generating device for generating a data set, which represents the lamella block (100) according to one of Claims 1 to 9;
- storage device for storing the data set;
- processing device for receiving the data set and for actuating a device for additive manufacture in such a way that it manufactures the lamella block (100) which is represented in the data set.

16. A computer program, comprising data sets which on reading of the data sets by a processing device or a computer causes it to actuate a device for additive manufacture in such a way that the device for additive manufacture manufactures a lamella block (100) having the features according to one of Claims 1 to 9.

17. A machine-readable data carrier, on which the computer program according to Claim 16 is stored.

## Revendications

1. Bloc de lamelles (100) pour calibrer un profilé extrudé à l'intérieur d'un dispositif d'étalonnage, dans lequel le bloc de lamelles (100) comprend une structure d'appui (120) et une structure de lamelles (110) présentant une pluralité de lamelles (112), dans lequel les lamelles (112) sont disposées en étant à distance l'une de l'autre et dans le sens longitudinal (L) de la structure d'appui (120) sur la structure d'appui (120), dans lequel la structure d'appui (120) présente plusieurs percées (122, 122a) dont la forme et/ou l'agencement à l'intérieur de la structure d'appui (120) dépend(ent) d'une charge admissible mécanique prédéfinie pour la structure d'appui (120), **caractérisé en ce que**
les percées (122, 122a) sont ainsi formées en section transversale et disposées le long de la structure d'appui (120) que la structure d'appui (120) présente un poids propre optimisé en tenant compte de la charge admissible mécanique prédéfinie.

2. Bloc de lamelles (100) selon la revendication 1, **caractérisé en ce que** la structure d'appui (120) présente un profilé (121) prédéfini en section par rapport au sens longitudinal (L) et adapté à la charge admissible mécanique.

3. Bloc de lamelles (100) selon l'une des revendications précédentes, **caractérisé en ce que** les percées (122, 122a) sont formées le long de la structure d'appui (120) et essentiellement transversalement au sens longitudinal (L) de la structure d'appui (120).

4. Bloc de lamelles (100) selon l'une des revendications précédentes, **caractérisé en ce que** les percées (122, 122a) varient dans leur forme et/ou leur agencement le long de la structure d'appui (120).

5. Bloc de lamelles (100) selon la revendication 4, **caractérisé en ce que** la forme et/ou l'agencement des percées (122, 122a) varie(nt) en fonction de la sollicitation mécanique produite attendue le long du bloc de lamelles (100).

6. Bloc de lamelles (100) selon l'une des revendications précédentes, **caractérisé en ce que** le bloc de lamelles (100) est formé d'une seule pièce.

7. Bloc de lamelles (100) selon l'une des revendications précédentes, **caractérisé en ce que** la structure d'appui (120) et les lamelles (112) de la structure de lamelles (110) sont fabriquées dans le même matériau ou dans des matériaux différents.

8. Bloc de lamelles (100) selon l'une des revendications précédentes, **caractérisé en ce que** la structure d'appui (120) et/ou les lamelles (112) sont formées dans un matériau métallique ou un matériau polymère.

9. Bloc de lamelles selon l'une des revendications précédentes, **caractérisé en ce que** le bloc de lamelles (100) est fabriqué par impression 3D, respectivement au moyen d'un procédé de fabrication additive.

10. Dispositif d'étalonnage pour calibrer des profilés extrudés, comprenant une pluralité de blocs de lamelles (100) selon l'une des revendications 1 à 9, dans lequel les blocs de lamelles (100) sont disposés entre eux pour former une ouverture d'étalonnage.

11. Dispositif d'étalonnage selon la revendication 10, dans lequel le dispositif d'étalonnage comprend une pluralité de dispositifs d'actionnement, dans lequel chacun de la pluralité de dispositifs d'actionnement est couplé à une pluralité de blocs de lamelles (100) pour actionner un bloc de lamelles (100) individuellement.

12. Procédé de fabrication d'un bloc de lamelles (100) selon l'une des revendications 1 à 9, comprenant l'étape de fabrication du bloc de lamelles (100) par impression 3D, respectivement au moyen d'un procédé de fabrication additive, dans lequel le bloc de lamelles (100) comprend une structure d'appui (120) et une structure de lamelles (110) présentant une pluralité de lamelles (112), dans lequel les lamelles (112) sont disposées à distance l'une de l'autre et dans le sens longitudinal (L) de la structure d'appui (120) sur la structure d'appui (120), et la structure d'appui (120) présente plusieurs percées (122, 122a) dont la forme et/ou l'agencement à l'intérieur de la structure d'appui (120) dépend(ent) d'une charge admissible mécanique prédéfinie pour la structure d'appui (120), dans lequel les percées (122, 122a) sont ainsi formées dans leur forme transversale et disposées le long de la structure d'appui (120) que la structure d'appui (120) présente un poids propre optimisé en tenant compte de la charge admissible mécanique prédéfinie.

13. Procédé selon la revendication 12, comprenant en outre le calcul d'une structure porteuse optimisée d'une géométrie 3D de bloc de lamelles, et la conversion des données de géométrie 3D calculées en commandes de pilotage correspondantes pour l'impression 3D, respectivement la fabrication additive, dans lequel la forme et l'agencement des percées (122, 122a) sont adaptées aux sollicitations mécaniques locales attendues de la structure porteuse pour produire une structure d'appui au poids réduit, sans affaiblir la sollicitation mécanique du bloc de lamelles (100).

14. Procédé de fabrication d'un bloc de lamelles (100), les étapes comprenant :
- de créer un jeu de données qui reproduit le bloc de lamelles (100) selon l'une des revendications 1 à 9 ;
- d'enregistrer le jeu de données sur un dispositif de mémoire ou un service ; et
- de saisir le jeu de données dans un dispositif de traitement ou un ordinateur qui pilote un dispositif de fabrication additive de telle sorte que celui-ci fabrique le bloc de lamelles (100) formé dans le jeu de données.

15. Système de fabrication additive d'un bloc de lamelles (100), comprenant :
- un dispositif de production de jeu de données pour produire un jeu de données qui reproduit le bloc de lamelles (100) selon l'une des revendications 1 à 9 ;
- un dispositif de mémoire pour conserver le jeu de données en mémoire ;
- un dispositif de traitement pour recevoir le jeu de données et piloter un dispositif de fabrication additive de telle façon que celui-ci fabrique le bloc de lamelles (100) reproduit dans le jeu de données.

16. Programme informatique, comprenant des jeux de données qui, lors de la lecture de jeux de données par un dispositif de traitement ou un ordinateur, fait que celui-ci pilote un dispositif de fabrication additive de telle façon que le dispositif de fabrication additive fabrique un bloc de lamelles (100) ayant les caractéristiques selon l'une des revendications 1 à 9.

17. Support de données lisible sur ordinateur, sur lequel est enregistré le programme informatique selon la revendication 16.
